# FASCICULE DE BREVET EUROPEEN

(11) **EP 0 521 777 B1**
(45) Date de publication et mention de la délivrance du brevet: **15.05.1996**
(21) Numéro de dépôt: 92401867.4
(22) Date de dépôt: 30.06.1992
(51) Int. Cl.: G01K 5/20

(54) **Thermomètre à mininum et à maximum du type circulaire à aiguilles**
Maximum-Minimum Rundthermometer mit Zeigern
Maximum-minimum thermometer of circular type with pinters

(30) Priorité: 02.07.1991 FR 9108249
(43) Date de publication de la demande: 07.01.1993
(73) Titulaire: INNOVEX, F-76370 Neuville-les-Dieppe (FR)
(72) Inventeur: Scherer, Patrick, F-76370 Puys (FR)
(74) Mandataire: Phélip, Bruno

(56) Documents cités:
- CH-A- 172 118
- US-A- 2 577 492
- US-A- 3 089 340

## Description

La présente invention concerne un thermomètre à minimum et à maximum du type comportant un boîtier muni d'un cadran circulaire gradué, une aiguille indicatrice de la température solidaire d'un pivot rotatif entraîné en rotation par l'intermédiaire d'un élément métallique en spirale, dilatable en fonction de la température, deux aiguilles témoins coaxiales à l'aiguille de température, montées rotatives à l'intérieur d'un couvercle translucide du boîtier coiffant le cadran et entraînées respectivement dans un sens ou dans l'autre par des moyens d'entraînement de l'aiguille indicatrice vers des positions minimum et maximum de température pour une période de temps déterminée, des moyens de manoeuvre des aiguilles témoins disposés sur le couvercle pour remise en concordance avec l'aiguille de température pour une nouvelle période de temps.

Dans les thermomètres connus de ce type, la commande des aiguilles témoins lors de leur remise en concordance avec l'aiguille de température, s'effectue par l'intermédiaire de deux boutons. Ceux-ci sont disposés sur le couvercle à l'extérieur de celui-ci. L'un des boutons commande l'ensemble des aiguilles témoins dans un même sens de rotation jusqu'à ce que l'une d'elles rencontre les moyens d'entraînement de l'aiguille indicatrice.

La seconde aiguille est alors ramenée contre les mêmes moyens d'entraînement par l'intermédiaire d'un second bouton rotatif disposé concentriquement dans le premier et commandant ladite seconde aiguille dans un sens ou dans l'autre.

Cela présente l'inconvénient de devoir manoeuvrer à deux reprises deux boutons de commande différents pour effectuer la remise en concordance des aiguilles, ce qui rend l'opération fastidieuse, d'autant plus que les boutons en question sont de dimensions relativement réduites ce qui ne facilite pas l'opération.

On connaît également des thermomètres du type précédent, dans lesquels les moyens de manoeuvre des aiguilles témoins, pour leur remise en concordance, comprennent un bouton unique.

Les documents US-A-2 577 492 et US-A-3 089 040 décrivent un thermomètre comportant une aiguille de remise à zéro, liée en rotation avec un bouton de commande. En faisant tourner ce bouton, l'aiguille de remise à zéro est mise en contact avec l'une des deux aiguilles témoins et la fait tourner jusqu'à ce que l'aiguille témoin vienne en concordance avec l'aiguille de température. La même opération est alors effectuée pour l'autre aiguille témoin, en faisant tourner le bouton dans l'autre sens. La remise en concordance des deux aiguilles témoins avec l'aiguille de température nécessite donc de manoeuvrer à deux reprises le bouton de commande, en la faisant tourner dans des sens opposés.

Le document CH-A-172118 décrit un thermomètre comprenant un bouton de commande relié à une des aiguilles témoins et pouvant l'entraîner dans un sens ou dans l'autre. Le bouton de commande est tout d'abord tourné pour amener l'aiguille témoin à laquelle il est relié, en butée sur l'autre aiguille témoin et ainsi la faire tourner jusqu'à concordance avec l'aiguille de température. Le bouton de commande est ensuite tourné en sens inverse pour amener l'aiguille témoin à laquelle il est relié, en concordance avec l'aiguille de température.

Ainsi, la remise en concordance des deux aiguilles témoins avec l'aiguille de température nécessite également deux opérations, le bouton de commande devant être manoeuvré à deux reprises, en le faisant tourner dans des sens opposés.

La présente invention a pour but de remédier à ces inconvénients et concerne à cet effet un thermomètre à minimum et à maximum du type précité, caractérisé en ce que le bouton de commande unique agit simultanément sur les deux aiguilles témoins, au cours d'une action rotative manuelle effectuée dans le même sens jusqu'à mise en concordance desdites aiguilles témoins avec l'aiguille de température.

De préférence, le bouton de commande unique agit simultanément sur les deux aiguilles témoins, selon des mouvements convergents ou divergents, selon que le bouton est tourné dans un sens ou dans l'autre.

La présente invention concerne également les caractéristiques ci-après considérées isolément ou selon toutes leurs combinaisons possibles.

Selon une autre caractéristique de l'invention, le bouton de commande unique agit simultanément sur les deux aiguilles témoins par l'intermédiaire d'un jeu d'engrenage.

Avantageusement le jeu d'engrenage est constitué par un premier pignon solidaire du bouton de commande, disposé de manière excentrée par rapport à l'axe des aiguilles à l'intérieur d'une couronne dentée et en prise à la fois avec la denture interne de ladite couronne et avec la denture externe d'un second pignon, la couronne et le second pignon étant montés coaxialement à l'aiguille de température sur une broche cylindrique interne du couvercle et aptes à entraîner respectivement l'une et l'autre des aiguilles témoins autour de leur axe dans un mouvement angulaire simultané, convergent ou divergent. De plus, le second pignon est ménagé à l'une des extrémités d'un fourreau cylindrique engagé sur la broche du couvercle, son autre extrémité s'étendant radialement pour former un plateau circulaire apte à constituer un support à la couronne dentée et au premier pignon qui s'y loge.

Selon un mode préférentiel de réalisation, les aiguilles témoins sont pincées dans un assemblage glissant respectivement entre une joue inférieure de la couronne dentée et une contre-joue qui lui est solidaire et entre une joue supérieure du plateau support prolongeant le second pignon et une autre contre-joue qui lui est solidaire de manière à ce que l'entraînement des aiguilles témoins s'effectue soit librement par glissement entre les joues fixes sous l'action des moyens d'entraînement de l'aiguille de température vers un minimum ou vers un maximum, soit par friction entre les mêmes joues rendues rotatives simultanément par la couronne dentée et par le second pignon sous l'action du bouton de commande par l'intermédiaire du premier pignon lors de la remise en concordance avec l'aiguille de température. Par un tel système, l'entraînement par friction des aiguilles témoins s'effectue simultanément jusqu'à ce qu'une première aiguille témoin vienne en butée sur les moyens d'entraînement de l'aiguille de température, moment à partir duquel ladite première aiguille glisse alors que la seconde poursuit sa course jusqu'à rencontrer à son tour les moyens d'entraînement de l'aiguille.

Bien entendu le bouton de manoeuvre rotatif peut être actionné dans les deux sens.

L'invention sera encore illustrée, par la description qui suit, faite en regard des dessins annexés sur lesquels:

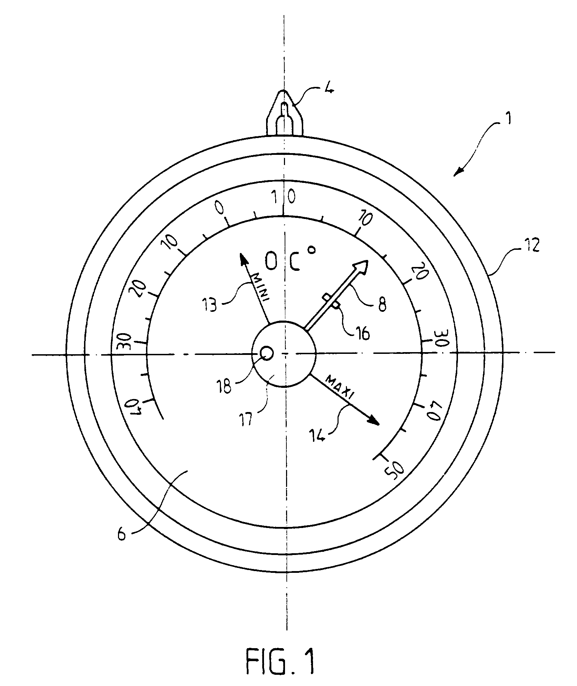

Figure 1 est une vue frontale d'un thermomètre à minimum et à maximum selon l'invention.

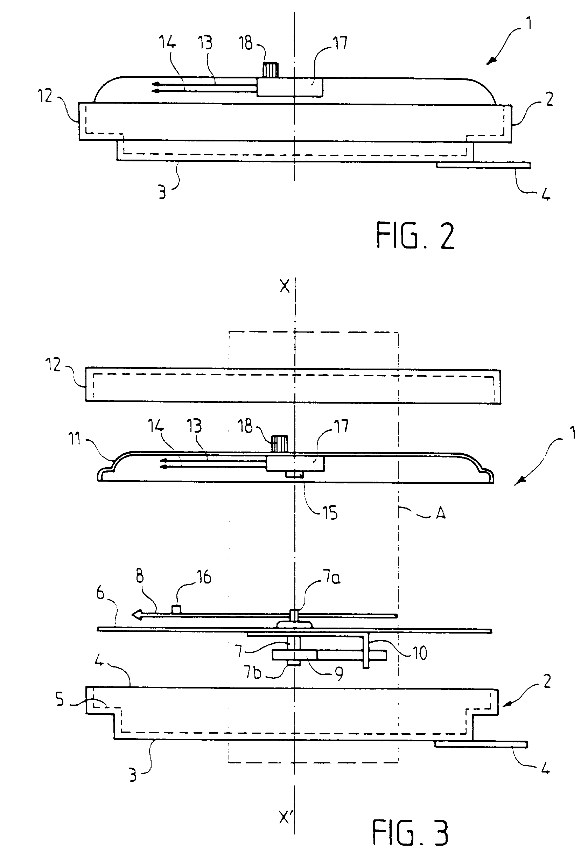

Figure 2 est une vue de côté selon la Figure 1.

Figure 3 est une vue éclatée selon la Figure 2.

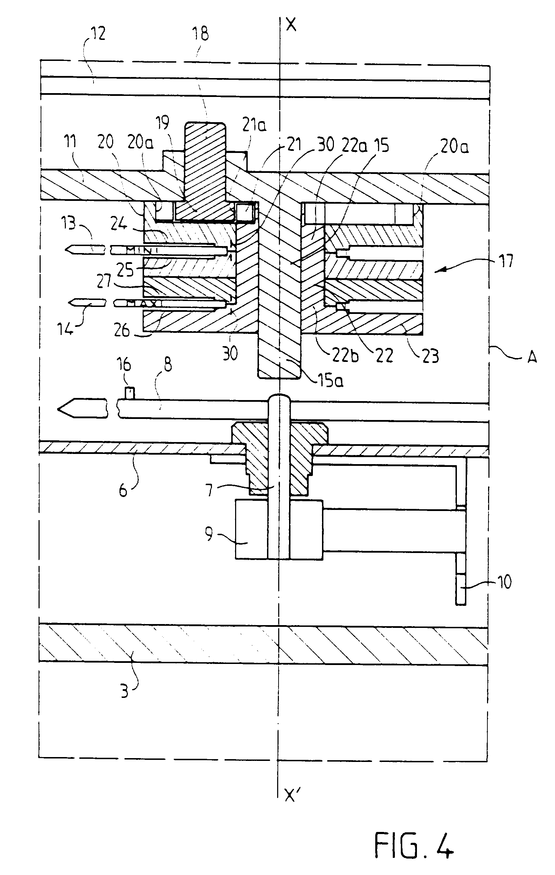

Figure 4 est une vue éclatée et en coupe selon le détail A de la Figure 3, à l'échelle agrandie.

Le thermomètre à minimum et à maximum désigné dans son ensemble par 1 sur les Figures, comprend de manière connue un boîtier 2 muni d'un fond 3 et ouvert à sa partie supérieure 4.

Sur le fond 3 est riveté un organe d'accrochage 4 du thermomètre 1.

La partie ouverte 4 du boîtier 2 est apte à recevoir, sur un épaulement périphérique 5 un cadran circulaire gradué 6 au centre duquel est serti avec jeu un pivot rotatif 7 dont une extrémité 7a débouchant sur la face supérieure graduée du cadran 6 est solidaire d'une aiguille indicatrice de température 8 et dont son autre extrémité 7b est solidaire d'un élément métallique 9 en spirale et en appui sur un support 10 sous le cadran 6.

La dilatation de la spirale a pour effet de provoquer l'entraînement en rotation du pivot 7 donc de l'aiguille de température 8, dans un sens ou dans l'autre devant le cadran gradué 6.

Le thermomètre 1 est également constitué par un couvercle translucide 11 coiffant à la fois le boîtier 2 et le cadran 6 pour le protéger des intempéries. La fixation du couvercle 11 sur le boîtier 2 est assurée par l'intermédiaire d'une bague 12 encerclant les bords latéraux des éléments précités.

Le couvercle 11 porte deux aiguilles témoins 13, 14 disposées coaxialement par rapport à l'axe X-X′ du thermomètre dans lequel se trouve également l'aiguille de température 8. Les aiguilles témoins 13-14 sort montées rotatives sur une broche 15 solidaire du couvercle 11 sur sa face interne et sont susceptibles d'être entraînées en rotation, respectivement dans un sens ou dans l'autre par des moyens d'entraînement 16 de l'aiguille indicatrice 8, vers des positions minimum ou maximum de température (mini, maxi), pour une période de temps déterminée.

En outre il est prévu des moyens de manoeuvre 17 des aiguilles témoins 13, 14 qui sont disposés sur le couvercle 11 pour remise en concordance avec l'aiguille 8 pour une nouvelle période de temps.

Selon l'invention, les moyens de manoeuvre 17 des deux aiguilles témoins 13, 14 comprennent un bouton de commande unique 18, disposé à l'extérieur du couvercle 11 et agissant sur lesdites aiguilles internes 13, 14 au cours d'une action rotative manuelle effectuée dans le même sens jusqu'à mise en concordance. Avantageusement selon le système qui sera décrit ci-après, le bouton 18 agit simultanément sur les deux aiguilles témoins 13, 14 selon des mouvements convergents ou divergents, selon que l'on tourne ledit bouton 18 dans un sens ou dans l'autre.

Le système d'entraînement pour la remise en concordance des aiguilles 13, 14 est un jeu d'engrenage constitué par un premier pignon 19 solidaire du bouton de commande 18, disposé de manière excentré par rapport à l'axe X-X′ des aiguilles 13, 14 à l'intérieur d'une couronne dentée 20 et en prise à la fois avec la denture interne 20a de ladite couronne 20 et avec la denture externe 21a d'un second pignon 21, la couronne 20 et le second pignon 21 étant montés coaxialement à l'aiguille de température 8 sur une broche cylindrique interne 15 du couvercle 11 et aptes à entraîner respectivement l'une et l'autre des aiguilles témoins 13, 14 autour de leur axe X-X′ dans un mouvement angulaire simultané, convergent ou divergent.

On comprend bien que lorsqu'un pignon menant 20 en l'occurrence, entraîne simultanément une denture interne d'une couronne me.née et une denture externe d'un autre pignon mené, il en résulte des sens de rotation inverses de la couronne par rapport au second pignon mené, alors que deux pignons menés à denture externe auraient été entraînés dans le même sens par le pignon menant.

L'entraînement des aiguilles 13 et 14 s'effectue donc respectivement par l'intermédiaire de la couronne 20 et du second pignon 21.

Pour ce faire, le second pignon 21 est ménagé à l'une des extrémités 22a d'un fourreau cylindrique 22 engagé sur la broche 15 du couvercle 11, son autre extrémité 22b s'étendant radialement pour former un plateau circulaire 23 apte à constituer un support à la couronne dentée 20 et au premier pignon 19 qui s'y loge.

Les aiguilles témoins 13, 14 sont pincées dans un assemblage glissant respectivement entre une joue inférieure 24 de la couronne dentée 20 et une contre-joue 25 qui lui est solidaire et entre une joue supérieure 26 du plateau support 23 prolongeant le second pignon 21 et une autre contre-joue 27 qui lui est solidaire de manière à ce que l'entraînement des aiguilles témoins 13, 14 s'effectue soit librement par glissement entre les joues fixes 24, 25 ou 26, 27 par glissement sous l'action de moyens d'entraînement 16 de l'aiguille de température 8 vers un minimum ou vers un maximum, soit par friction entre les mêmes joues 24, 25 ou 26, 27 rendues rotatives simultanément par la couronne dentée 20 et par le second pignon 21 sous l'action du bouton de commande 18 par l'intermédiaire du premier pignon 19 lors de la remise en concordance avec l'aiguille de température 8. Dans une telle construction, le plateau support 23 a également pour avantage de pouvoir permettre un empilement des éléments constitutifs du système préalablement à son montage sur la broche 15 du couvercle 11. Il est à noter que selon le fonctionnement du système, l'entraînement par friction des aiguilles témoins 13, 14 s'effectue simultanément jusqu'à ce qu'une première aiguille témoin 13 ou 14 vienne en butée sur les moyens d'entraînement 16 de l'aiguille de température 8, moment à partir duquel ladite première aiguille 13 ou 14 glisse, alors que la seconde aiguille 13 ou 14 poursuit sa course jusqu'à rencontrer à son tour les moyens d'entraînement 16 de l'aiguille 8. Les aiguilles 13 et 14 sont ainsi bien remises en concordance avec l'aiguille de température 8.

Bien entendu cette opération pourra être effectuée par rotation dans un sens ou dans l'autre du bouton de manoeuvre 18.

La solidarisation des joues 24, 25 ou 26, 27 s'effectue par tout moyen 30 connu en soi, comme par exemple par collage.

## Revendications

1. Thermomètre à minimum et à maximum comportant un boîtier (2) muni d'un cadran circulaire gradué (6), une aiguille indicatrice de la température (8) solidaire d'un pivot rotatif (7) entraîné en rotation par l'intermédiaire d'un élément métallique en spirale (9), dilatable en fonction de la température, deux aiguilles témoins (13, 14) coaxiales à l'aiguille de température (8) montées rotatives à l'intérieur d'un couvercle translucide (11) du boîtier (2) coiffant le cadran (6) et entraînées respectivement dans un sens ou dans l'autre par des moyens d'entraînement (16) de l'aiguille indicatrice (8) vers des positions minimum et maximum de température pour une période de temps déterminée, des moyens de manoeuvre des aiguilles témoins (13, 14) disposés sur le couvercle (11) pour remise en concordance avec l'aiguille de température pour une nouvelle période de temps, comprenant un bouton de commande unique externe (18), ledit thermomètre étant caractérisé en ce que le bouton de commande unique (18) agit simultanément sur les deux aiguilles témoins au cours d'une action rotative manuelle effectuée dans le même sens jusqu'à mise en concordance desdites aiguilles témoins (13, 14) avec l'aiguille de température (8).

2. Thermomètre selon la revendication 1, caractérisé en ce que le bouton de commande unique (18) agit simultanément sur les deux aiguilles témoins (13, 14) selon des mouvements convergents ou divergents, selon que le bouton est tourné dans un sens ou dans l'autre.

3. Thermomètre selon l'une des revendications 1 ou 2, caractérisé en ce que le bouton de commande unique (18) agit simultanément sur les deux aiguilles témoins (13, 14) par l'intermédiaire d'un jeu d'engrenage (19, 20, 21).

4. Thermomètre selon la revendication 3, caractérisé en ce que le jeu d'engrenage est constitué par un premier pignon (19) solidaire du bouton de commande (18) disposé de manière excentrée par rapport à l'axe X-X' des aiguilles (13, 14) à l'intérieur d'une couronne dentée (20) et en prise à la fois avec la denture interne (20a) de ladite couronne (20) et avec la denture externe (21a) d'un second pignon (21), la couronne (20) et le second pignon (21) étant montés coaxialement à l'aiguille de température (8) sur une broche cylindrique externe (15) du couvercle (11) et aptes à entraîner respectivement l'une et l'autre des aiguilles témoins (13, 14) autour de leur axe X-X′ dans un mouvement angulaire simultané convergent ou divergent.

5. Thermomètre selon la revendication 4, caractérisé en ce que le second pignon (21) est ménagé à l'une des extrémités (22a) d'un fourreau cylindrique (22) engagé sur la broche (15) du couvercle (11), son autre extrémité (22b) s'étendant radialement pour former un plateau circulaire (23) apte à constituer un support à la couronne dentée (20) et au premier pignon (19) qui s'y loge.

6. Thermomètre selon les revendications 4 ou 5, caractérisé en ce que les aiguilles témoins (13, 14) sort pincées dans un assemblage glissant respectivement entre une joue inférieure (24) de la couronne dentée (20) et une contre-joue (25) qui lui est solidaire et entre une joue supérieure (26) du plateau support (23) prolongeant le second pignon (21) et une autre contre-joue (27) qui lui est solidaire, de manière à ce que l'entraînement des aiguilles témoins (13, 14) s'effectue soit librement par glissement entre les joues fixes (24, 25 ou 26, 27) sous l'action de moyens d'entraînement (16) de l'aiguille de température (8) vers un minimum ou vers un maximum, soit par friction entre les mêmes joues (24, 25 ou 26, 27) rendues rotatives simultanément par la couronne dentée (20) et par le second pignon (21) sous l'action du bouton de commande (18) par l'intermédiaire du premier pignon (19) lors de la remise en concordance avec l'aiguille de température (8).

7. Thermomètre selon la revendication 6, caractérisé en ce que l'entraînement par friction des aiguilles témoins (13, 14) s'effectue simultanément jusqu'à ce qu'une première aiguille témoin (13 ou 14) vienne en butée sur les moyens d'entraînement (16) de l'aiguille de température (8), moment à partir duquel, ladite première aiguille (13 ou 14) glisse, alors que la seconde (13 ou 14) poursuit sa course jusqu'à rencontrer à son tour les moyens d'entraînement (16) de l'aiguille (8).

8. Thermomètre selon l'une quelconque des revendications 1 à 7, caractérisé en ce que le bouton de manoeuvre rotatif (18) peut être actionné dans les deux sens.

## Patentansprüche

1. Maximum-Minimum-Thermometer, umfassend ein Gehäuse (2), das mit einer runden Skalenscheibe (6) mit Gradeinteilung versehen ist, einen die Temperatur anzeigenden Zeiger (8), der mit einem Drehzapfen (7) verbunden ist, der mittels eines spiralförmigen Metallelements (9) drehangetrieben wird, welches abhängig von der Temperatur ausdehnbar ist, zwei zum Temperaturzeiger (8) koaxiale Vergleichszeiger (13, 14), die drehbar im Inneren eines die Skalenscheibe (6) bedeckenden, transparenten Deckels (11) des Gehäuses (2) angebracht sind und durch Antriebsmittel (16) des anzeigenden Zeigers (8) jeweils in eine oder in die andere Richtung zu Positionen der maximalen und der minimalen Temperatur für eine bestimmte Zeitdauer angetrieben werden, und auf dem Deckel (11) angebrachte Betätigungsmittel für die Vergleichszeiger (13, 14) zum Zurücksetzen in Übereinstimmung mit dem Temperaturzeiger für eine neue Zeitdauer, die einen einzigen äußeren Steuerknopf (18) enthalten, wobei das Thermometer dadurch gekennzeichnet ist, daß der einzige Steuerknopf (18) während einer Drehtätigkeit, die von Hand in dieselbe Richtung ausgeführt wird, bis die Vergleichszeiger (13, 14) in Übereinstimmung mit dem Temperaturzeiger (8) gebracht sind, gleichzeitig auf die beiden Vergleichszeiger einwirkt.

2. Thermometer nach Anspruch 1, dadurch gekennzeichnet, daß der einzige Steuerknopf (18) gleichzeitig auf die beiden Vergleichszeiger (13, 14) entsprechend konvergenter oder divergenter Bewegungen einwirkt, je nachdem, ob der Knopf in eine oder in die andere Richtung gedreht wird.

3. Thermometer nach einem der Ansprüche 1 oder 2, dadurch gekennzeichnet, daß der einzige Steuerknopf (18) mittels eines Getriebes (19, 20, 21) gleicnzeitig auf die beiden Vergleichszeiger (13,14) einwirkt.

4. Thermometer nach Anspruch 3, dadurch gekennzeichnet, daß das Getriebe aus einem mit dem Steuerknopf (18) verbundenen ersten Getrieberad (19) besteht, das in bezug auf die Achse X-X' der Zeiger (13, 14) exzentrisch im Inneren eines Zahnkranzes (20) angeordnet ist und gleichzeitig in die innere Verzahnung (20a) des Zahnkranzes (20) und in die äußere Verzahnung (21a) eines zweiten Getrieberads (21) eingreift, wobei der Zahnkranz (20) und das zweite Getrieberad (21) koaxial zum Temperaturzeiger (8) auf einer äußeren zylindrischen Spindel (15) des Deckels (11) angebracht und geeignet sind, den einen bzw. den anderen der Vergleichszeiger (13, 14) um ihre Achse X-X' zu einer gleichzeitigen konvergenten oder divergenten Winkelbewegung anzutreiben.

5. Thermometer nach Anspruch 4, dadurch gekennzeichnet, daß das zweite Getrieberad (21) an einem der Enden (22a) einer mit der Spindel (15) verbundenen, zylindrischen Hülse (22) angeordnet ist, wobei sich ihr anderes Ende (22b) radial ausbreitet, um eine runde Platte (23) zu bilden, die geeignet ist, einen Halt für den Zahnkranz (20) und das erste Getrieberad (19) zu bilden, das sich dort einfügt.

6. Thermometer nach den Ansprüchen 4 oder 5, dadurch gekennzeichnet, daß die Vergleichszeiger (13, 14) in einem Zusammenbau eingeklemmt sind, der zwischen einer unteren Führung (24) des Zahnkranzes (20) und einer Gegenführung (25), die mit ihr verbunden ist, bzw. zwischen einer oberen Führung (26) der Halteplatte (23), die das zweite Getrieberad (21) verlängert, und einer weiteren Gegenführung (27), die mit ihr verbunden ist, gleitet, so daß der Antrieb der Vergleichszeiger (13, 14) entweder frei unter der Einwirkung der Antriebsmittel (16) des Temperaturzeigers (8) durch Gleiten zwischen den festen Führungen (24, 25 oder 26, 27) zu einem Minimum oder zu einem Maximum hin oder bei der Zurücksetzung in Übereinstimmung mit dem Temperaturzeiger (8) unter der Einwirkung des Steuerknopfes (18) mittels des ersten Getrieberades (19) durch Reibung zwischen denselben Führungen (24, 25 oder 26, 27), die durch den Zahnkranz (20) und durch das zweite Getrieberad (21) gleichzeitig drehbar gemacht sind, erfolgt.

7. Thermometer nach Anspruch 6, dadurch gekennzeichnet, daß der Antrieb durch Reibung der Vergleichszeiger (13, 14) gleichzeitig erfolgt, bis ein erster Vergleichszeiger (13 oder 14) an den Antriebsmitteln (16) des Temperaturzeigers (8) zur Anlage kommt, dem Zeitpunkt, von dem an der erste Zeiger (13 oder 14) gleitet, bis er auf seinem Umlauf auf die Antriebsmittel (16) des Zeigers (8) trifft.

8. Thermometer nach einem der Ansprüche 1 bis 7, dadurch gekennzeichnet, daß der drehbare Betätigungsknopf (18) in die beiden Richtungen angetrieben werden kann.

## Claims

1. Maximum-minimum thermometer comprising a case (2) provided with a graduated circular dial (6), a temperature pointer (8) integral with a rotary spindle (7) driven in rotation by a spirally-wound metal element (9) dilatable with temperature, two indicating pointers (13, 14) coaxial to the temperature pointer (8) mounted so as to rotate inside a translucent cover (11) of the case (2) covering the dial (6) and driven respectively in one direction or the other by driving devices (16) provided on the temperature pointer (8) towards minimum and maximum temperature positions for a predetermined period of time, means for operating the indicating pointers (13, 14) being provided on the cover (11) to align said indicating pointers with the temperature pointer for a new period of time, comprising a single external control knob (18), said thermometer being characterised in that the single control knob (18) when turned by hand in a given direction acts simultaneously on the two indicating pointers until said indicating pointers (13, 14) coincide with the temperature pointer (8).

2. The thermometer according to claim 1, characterised in that the single control knob (18) acts simultaneously on the two indicating pointers (13, 14) causing them to converge or diverge, depending on the direction in which the knob is turned.

3. The thermometer according to either claim 1 or 2, characterised in that the single control knob (18) acts simultaneously on the two indicating pointers (13, 14) by means of a gear train (19, 20, 21).

4. The thermometer according to claim 3, characterised in that the gear train comprises a first pinion gear (19) integral with the control knob (18) arranged eccentrically with respect to the X-X' axis of the pointers (13, 14) inside a crown gear (20) and engaging both with the internal toothing (20a) of said crown gear (20) and with the external toothing (21a) of a second pinion gear (21), the crown (20) and the second pinion gear (21) being mounted coaxially to the temperature pointer (8) on a cylindrical spindle (15) projecting from the cover (11), and capable of respectively driving the two indicating pointers (13, 14) about their X-X' axis in a simultaneous converging or diverging angular movement.

5. The thermometer according to claim 4, characterised in that the second pinion gear (21) is provided at one end (22a) of a cylindrical sleeve (22) fitted over the spindle (15) of the cover (11), its other end (22b) extending radially to form a circular plate (23) capable of forming a support for the crown gear (20) and for the first pinion gear (19) housed therein.

6. The thermometer according to either claim 4 or 5, characterised in that the indicating pointers (13, 14) are pinched respectively in a sliding assembly between a lower cheek (24) of the crown gear (20) and a counter cheek (25) integral with it and between an upper cheek (26) of the support plate (23) extending from the second pinion gear (21) and another counter cheek (27) integral with it, in such a way that the indicating pointers (13, 14) are driven either freely by sliding between the fixed cheeks (24, 25 or 26, 27) when acted on by the driving devices (16) provided on the temperature pointer (8) towards a minimum or towards a maximum, or by friction between the same cheeks (24, 25 or 26, 27) when made to rotate simultaneously by the crown gear (20) and the second pinion gear (21) when acted on by the control knob (18) via the first pinion gear (19) at the time said pointers (13, 14) are brought back into coincidence with the temperature pointer (8).

7. The thermometer according to claim 6, characterised in that the friction driving of the indicating pointers (13, 14) is performed simultaneously until a first indicating pointer (13 or 14) abuts against the driving devices (16) provided on the temperature pointer (8), from which time said first indicating pointer (13 or 14) slips, while the second (13 or 14) continues along its path until it in turn abuts against the driving devices (16) provided on the temperature pointer (8).

8. The thermometer of any one of claims 1 to 7, characterised in that the rotary control knob (18) can be turned in both directions.
